# EUROPEAN PATENT SPECIFICATION

(11) **EP 3 183 098 B1**
(45) Date of publication and mention of the grant of the patent: **25.07.2018**
(21) Application number: 15749964.1
(22) Date of filing: 21.07.2015
(51) Int. Cl.: B25J 9/00

(54) **A DEVICE FOR CONTROL OF A SPHERICAL MOTION OF A BODY**
VORRICHTUNG ZUR STEUERUNG EINER KUGELFÖRMIGEN BEWEGUNG EINES KÖRPERS
DISPOSITIF POUR COMMANDE D'UN MOUVEMENT SPHÉRIQUE D'UN CORPS

(30) Priority: 18.08.2014 CZ 20140550
(43) Date of publication of application: 28.06.2017
(73) Proprietor: CVUT V Praze, Fakulta Strojní, 166 07 Praha 6 (CZ)
(72) Inventor: VALÁSEK, Michael, 143 00 Praha 4 (CZ); STORKÁN, Jaroslav, 434 01 Most (CZ)
(74) Representative: Novotny, Karel
(86) International application number: PCT/CZ2015/000079
(87) International publication number: WO 2016/026471

(56) References cited:
- WO-A1-03/093648
- WO-A2-2009/056079
- DE-A1- 3 738 939
- FR-A1- 2 672 836
- US-A- 3 215 391
- KURTZ R ET AL: "MULTIPLE-GOAL KINEMATIC OPTIMIZATION OF A PARALLEL SPHERICAL MECHANISM WITH ACTUATOR REDUNDANCY", IEEE TRANSACTIONS ON ROBOTICS AND AUTOMATION, IEEE INC, NEW YORK, US, vol. 8, no. 5, 1 October 1992 (1992-10-01) , pages 644-651, XP000320213, ISSN: 1042-296X, DOI: 10.1109/70.163788 cited in the application
- MICHAEL VALASEK ET AL: "Hexasphere-Redundantly Actuated Parallel Spherical Mechanism as a New Concept of Agile Telescope", ADVANCES IN ASTRONOMY, vol. 2010, no. 6, 1 January 2010 (2010-01-01), pages 1-6, XP055222409, ISSN: 1687-7969, DOI: 10.1109/70.163788

## Description

### Technical Field of the Invention

The invention involves a device for control of a spherical movement of a body connected with a frame through a spherical joint arranged on a shank connecting the body with the frame, where the shank is divided into two parts and the spherical joint with at least two rotational degrees of freedom is arranged between the first part of the shank, which is firmly fixed to the frame, and the second part of the shank, which is firmly fixed to the body, and by means of actuating arms with linear actuators arranged on the frame.

### State-of-the-art

The controlled spherical motion of a body is important in many applications, for example for tilting heads of machining devices or adjusting positions of telescopes and antennas. Such a movement is performed today either through mechanisms with a series kinematic structure, mostly based on gimbal, or mechanisms with a parallel kinematic structure. Mechanisms with a series kinematic structure have a large moveability, thereupon a range of 180 degrees in two rotations, but they are mass, their dynamic capabilities are low and they do not allow a continuous movement from one position to another in all positions. On the other hand, mechanisms with a parallel kinematic structure have a limited moveability, thereupon a range less than 90° in two rotations usually, but they feature substantially lower weight, have higher dynamic capabilities and they enable a continuous movement from all positions to all the subsequent positions.

Tilting heads of machining devices were successfully solved with the help of parallel kinematic structures in PCT WO 00/25976 and EP1123175B1 patents for Sprint Z3 tilting head made by DS Technologie company (called EcoSpeed), where the ability to move continuously between all positions with higher dynamics was achieved. Singular positions do not allow a larger angle range in these mechanisms. The improvement of this state-of-the-art can be achieved through application of redundant (excessive) number of arms with actuators, the number of which is higher than the number of degrees of freedom. Such a mechanism with a parallel kinematic structure for a spherical motion is described in an article by Kurtz, R., Hayward, V.: Multiple-Goal Kinematic Optimization of a Parallel Spherical Mechanism with Actuator Redundancy, IEEE Transactions on Robotics and Automation, 8(1992), 5, pp. 644-651, where there are 4 parallel arms used for a motion of a platform fixed to a frame through a spherical joint on a shank extended from the frame. This solution enables to increase a range of achievable angle positions substantially but it does not allow reaching a range of 90° and more, in addition, there is a lowered manipulability near extreme positions. This limitation emerges by two reasons. Both there are collisions occurring between the platform and the shank extending from the frame in extreme positions near 90° and the excessive number of 4 parallel arms is inadequate for a sufficient distance from singular positions within all the working area. Therefore a solution was proposed in CZ 302911 patent, removing the previous imperfections and reaching the motion range more than 90 degrees. However, this solution (called HexaSphere) needs four and more actuators, usually six actuators.

An alternative mechanism with a parallel kinematic structure, which enables to reach a platform tilting angles range up to 90° is Octapod (Valasek, M., Sika, Z., Bauma, V., Vampola, T.: The Innovative Potential of Redundantly Actuated PKM, In: Neugebauer, R.: Proc. of Parallel Kinematice Seminar 2004, IWU FhG, Chemnitz 2004, pp. 365- 384) and Metrom (Schwaar, M., Jaehnert, T., Ihlenfeldt, S.: Mechatronic Design, Experimental Properte Analysis and Machining Strategie for a 5-Strut-PKM, In: Neugebauer, R.: Proc. of Parallel Kinematice Seminar 2002, IWU FhG, Chemnitz 2002, pp. 671-681). A disadvantage of Octapod is that arms are positioned all around the platform. A disadvantage of Metrom is lowered manipulability near extreme positions.

The aim of this invention is a device for a controlled spherical motion of bodies on the basis of mechanisms with a parallel kinematic structure, which would achieve a moveability consonant to mechanisms with a series kinematic structure, thereupon a range up to 200° in two rotations while preserving all advantages of mechanisms with a parallel kinematic structure, whereas requiring a lower number of actuators in comparison with similar mechanisms. Another goal of this invention is to achieve, at the same time, higher accuracy of adjusting of a body's positions.

### Subject Matter of the Invention

The subject matter of the device for control of a spherical motion of a body connected to a frame through a spherical joint arranged on a shank connecting the body with the frame, where the shank is divided into two parts and the spherical joint with at least two rotational degrees of freedom is arranged between the first part of the shank, which is firmly fixed to the frame, and the second part of the shank, which is firmly fixed to the body, and by means of actuating arms with linear actuators arranged on the frame, consists in a fact that the number of parallel arms with linear actuators is three and at least one arm is connected to the linear actuator through a rotational joint, whereas other arm/s is/are connected to the linear actuator/s through a spherical joint. The parallel arms are connected to the linear actuators through spherical joints with at least two rotational degrees of freedom. A length of the first part of the shank attached to the frame is longer than the distance of the body's edge from the point of connection of the second part of the shank to the body. Axes of the linear actuators are parallel.

The actuating parallel arms are connected to the body through a spherical joint with at least two degrees of freedom connected to the external shank firmly fixed to the body, whereas the arms may be possibly bow-shaped.

A connecting line of the spherical joint centre and the centre of the spherical joint on the arm with the rotational joint is perpendicular to the rotational joint axis.

A plane perpendicular to the rotational joint axis and passing through the centre of the spherical joint on the arm with the rotational joint passes possibly off the spherical joint centre.

On the body there is an attached tool, an axis of which is parallel with the plane perpendicular to the rotational joint axis and passing through the centre of the spherical joint on the arm with the rotational joint, whereas it is perpendicular to the connecting line of the shank spherical joint centre and the centre of the spherical joint on the arm with the rotational joint. Alternatively, the first part of the shank is fitted with an actuator for a modification of the spherical joint position.

The advantage of this device consists in creation of the divided shank which enables rotating the body by 90° and more without collisions with the shank and in application of a low number of arms with actuators, in spite of their low number enabling to remove an occurrence of singular positions and to provide a sufficient distance from them within all the working area of the body.

### Survey of Figures in Drawings

The device for a body's spherical motion is schematically depicted in the attached Figures, where
Fig. 1 represents a scheme of a basic arrangement of the body connected to the frame by a spherical joint and performing a controlled spherical motion with a help of linear actuators in parallel arms,
Fig. 2 represents a vertical projection of the body as depicted in Fig. 1,
Fig. 3 represents a vertical projection of the arrangement of the body with offset arms,
Fig. 4 represents a vertical projection of the arrangement of the body with arms of various lengths,
Fig. 5 represents a scheme of a basic arrangement of the body with out-of-parallel axes of the linear actuators,
Fig. 6 represents an arrangement of a tool on the body,
Fig. 7 represents a possible alternative arrangement of a tool on the body,
Fig. 8 represents a scheme of an alternative arrangement of a parallel arm shape,
Fig. 9 represents a scheme of the basic arrangement of the body with the linear actuator at the shank with a spherical joint

### Examples of the Embodiments of the Invention

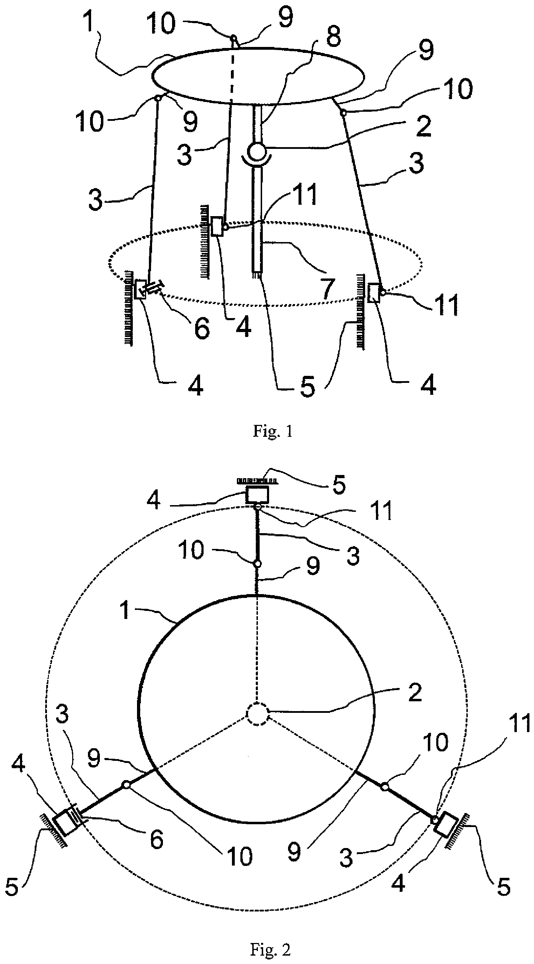

As it is evident in Fig. 1, platform-body 1 is connected to frame 5 through a shank, the first part 7 of which is firmly fixed to frame 5 and its second part 8 is firmly fixed to body 1. The first part 7 of the shank can possibly form one component together with frame 5 and the second part 8 may form one component with body 1. Both parts 7, 8 of the shank are connected together to spherical joint 2 which enables the body's 1 motion towards frame 5. Body 1 and frame 5 are connected to one another through parallel actuating arms 3, which are fitted with linear actuators 4 for draw-out movement of actuating arms 3. These parallel arms 3 have constant lengths. They are connected to body 1 through spherical joints 10 on shanks 9. Shanks 9 prevent a collision between arms 3 and body 1 when moving. One of arms 3 is connected to linear actuator 4 through rotational joint 6. The other two arms 3 are connected to linear actuators 4 through spherical joints 11. A controlled spherical motion of body 1 is achieved by a change in positions of linear actuators 4 in the guides on frame 5, leading to a change in positions of joints 11 and 6 of arms 3. The spherical motion of body 1 originates from a change in two turnings of body 1, which can be described by an azimuth and elevation. Linear actuators 4 can be e.g. realized as trolleys on a linear guide attached to frame 5 with a linear actuator consisting of a ball screw or a linear electric actuator. Spherical joints 2, 10, 11 consist of joints with at least two rotational degrees of freedom. The number of parallel arms 3 with drives 4 is redundant, which means that the number of parallel actuating arms 3 is three and is higher than the number of degrees of freedom of body 1 determined by two turnings. By this, singular positions are excluded from the working area of the spherical motion of body

The use of the divided shank composed of the first and the second part 7 and 8 enables to turn body 1 by more than 90°. To achieve such a turn, the length of the first part 7 of the shank fixed to frame 5 should be longer than a distance of the edge of body 1 from a point where the second part 8 of the shank is fixed to body 1. Adapting the length of the second part of shank 8, a varied angle range of rotation over 90° of body 1 can be achieved. Shanks 9 have a similar function to prevent a collision of platform-body 1 and arms 3 during their relative motion.

Fig. 2 represents a vertical projection of the device along the direction of axes of linear actuators 4, where these axes are relatively parallel to each other. There is an obvious condition of the arrangement, where a connecting line of the centre of spherical joint 2 and the centre of spherical joint 10 on arm 3 with rotational joint 6 is perpendicular to the axis of rotational joint 6. This is also determined by that the axis of rotational joint 6 is perpendicular to the axis of linear actuator 4 for movement of rotational joint 6. This condition ensures that spherical joint 2 lies in a plane where the centre of spherical joint 10 moves on arm 3 with rotational joint 6. Then body 1 rotates both around the axis perpendicular to this plane (this rotary motion ensures a movement of linear actuator 4 with rotational joint 6) and around the axis formed by the connecting line of the centre of spherical joint 2 and the centre of spherical joint 10 on arm 3 with rotational joint 6. (This rotary motion is ensured by movements of linear actuators 4 with spherical joints 11.)

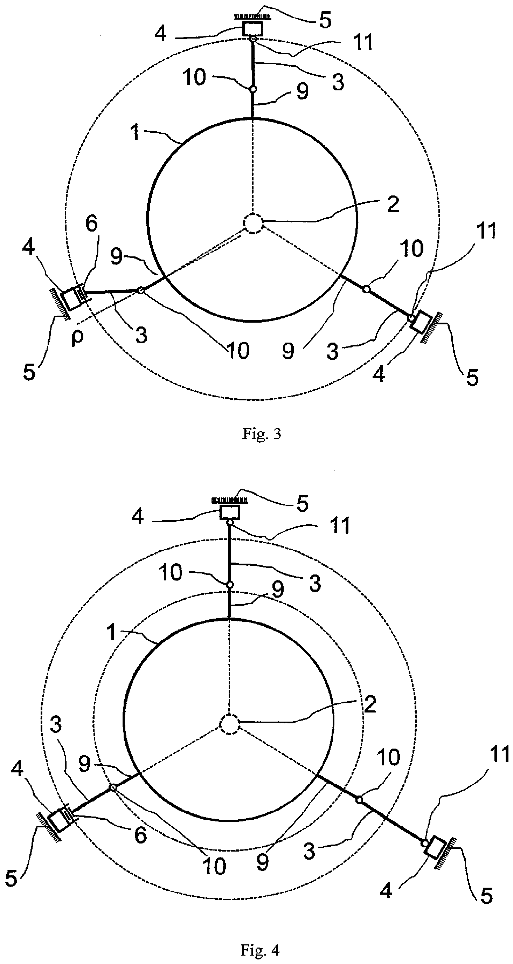

Fig. 3 represents a vertical projection of the device along the direction of axes of linear actuators 4, where these axes are relatively parallel to each other. There is an obvious condition of the arrangement, where a plane ρ perpendicular to the axis of rotational joint 6 and passing through the centre of spherical joint 10 on arm 3 with rotational joint 6 passes off the centre of spherical joint 2. This is an infringement of the condition depicted in Fig. 2. This arrangement may be advantageous for preventing collisions and for better moveability.

Fig. 4 represents a vertical projection of the device along the direction of axes of linear actuators 4, where these axes are relatively parallel to each other. There is an obvious condition of the arrangement, where a position of the centres of spherical joints 10 is not of the same distance from the centre of spherical joint 2, which is determined e.g. by the fact that the lengths of shanks 9 are different or platform-body 1 is not round-shaped. Further, there is an obvious condition of the arrangement, where lengths of particular arms 3 vary. This is an infringement of the conditions depicted in Fig. 2. The relevant lengths of arms 3 with spherical joints 11 are longer in Fig. 4 than for arm 3 with rotational joint 6. However, this may also be reversely and there can be all possible combinations of ratios of lengths. These arrangements may be advantageous for preventing collisions and for better moveability.

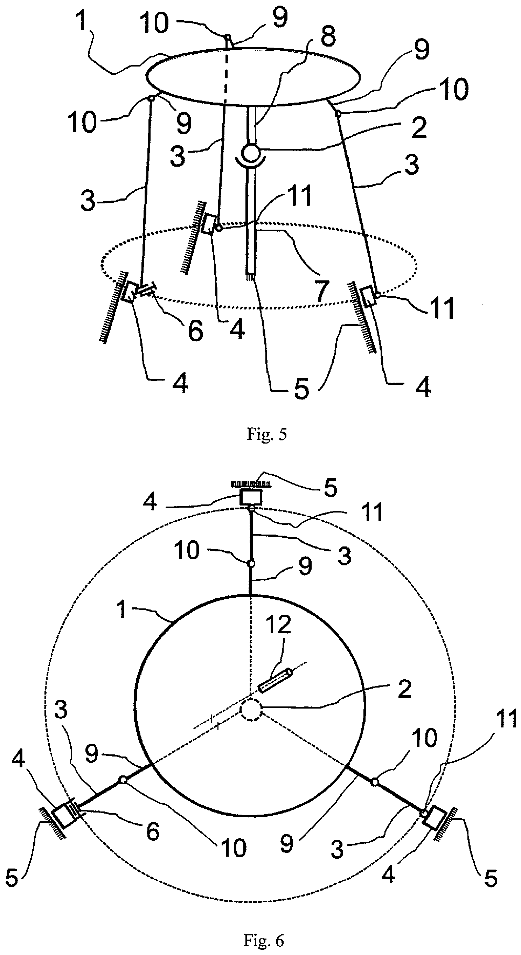

Fig. 5 represents a scheme of an arrangement with out-of-parallel axes of linear actuators 4. Actuators 4 move along the frame in various directions. These directions can be general or can exhibit also some other symmetry, for example a cone or a hyperboloid. This out-of-parallel arrangement may be advantageous for preventing collisions and for better moveability.

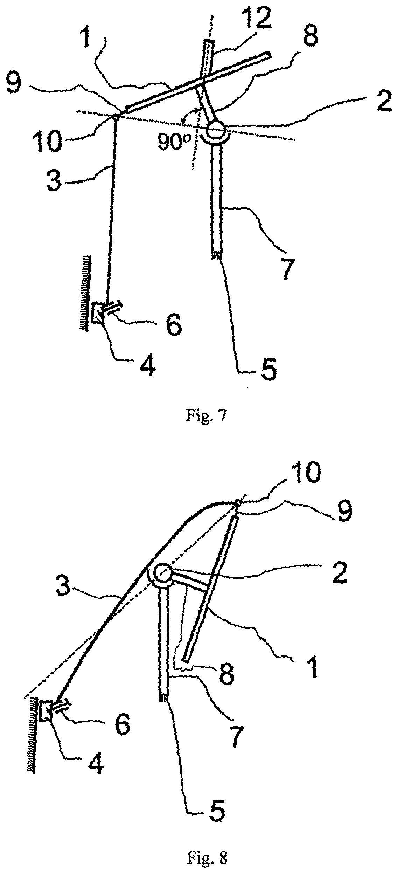

Fig. 6 and Fig. 7 schematically depict an arrangement of tool 12 on body 1. In Fig. 6 a condition is met that the axis of tool 12 carried on platform 1 is parallel to the plane perpendicular to the axis of rotational joint 6 passing through the centre of spherical joint 10 on arm 3 with rotational joint 6. And in Fig. 7 a condition is met that the axis of tool 12 carried on platform 1 is perpendicular to the connecting line of the centre of spherical joint 2 and the centre of spherical joint 10 on arm 3 with rotational joint 6. It is evident that generally the centre of the tool has not to pass through the centre of platform-tool 1.

Fig. 8 represents an alternative arrangement of parallel arm 3, which is bow-shaped. In Figures described above the parallel arms 3 are rectilinear. However, these arms may be bow-shaped in order to prevent collisions, for example a collision with spherical joint 2, as evident in Fig. 8. A working area of the device can be enlarged this way.

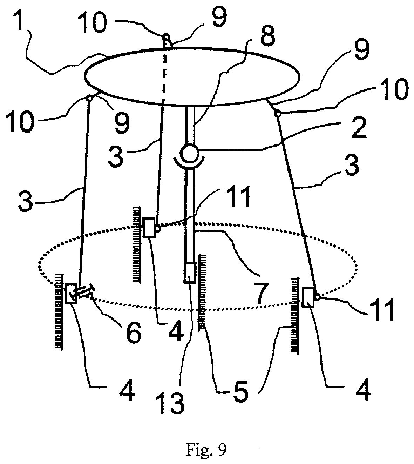

Fig. 9 shows a possible additional actuator 13 of the shank of spherical joint 2 on the frame. The actuator is arranged that the first part 7 of the shank is fitted with actuator 13 for a change in a position of spherical joint 2. An example of such an actuator 13 can be a linear actuator, which, along with actuators 4, enables to draw-out platform-body 1 from the guides determined by movements of actuators 4. However, these can also be more complicated actuators with more degrees of freedom, for example in all moving axes x, y, z.

A great advantage of the described arrangement is that a motion of platform-body 1 is possible within two rotations in a range up to 200 degrees, while preserving all advantages of mechanisms with a parallel kinematic structure using only three actuators. The achieved moveability is large and a satisfactory distance from singular positions in the entire working area is achieved, leading also to a favourable transmission of forces between tool 12 and actuators 4 and to an increase in accuracy of positioning of tool 12. This is a great progress in comparison with previous solutions, where five to six actuators were needed or a motion was not possible within such a large range even with four actuators or was very limited with three actuators.

The described solution variants may be combined with each other. If a parallelism or perpendicularity of axes or planes is given, then this condition is realized through the manufacture of the device and this manufacturing realization of the accurate condition of parallelism or perpendicularity is always met only within manufacturing tolerances. Spherical joints may be realized in various ways, for example as ball joints or more of connected rotational joints. The position of actuators is computer-controlled.

## Claims

1. A device for control of a spherical motion of a body (1) connected with a frame (5) through a spherical joint (2) arranged on a shank connecting the body (1) with the frame (5), where the shank is divided into two parts (7, 8) and the spherical joint (2) with at least two rotational degrees of freedom is arranged between the first part (7) of the shank, which is firmly fixed to the frame (5) and the second part (8) of the shank, which is firmly fixed to the body (1), and by means of actuating arms (3) with linear actuators (4) arranged on the frame (5), **characterized in that** the number of parallel arms (3) with linear actuators (4) is three and at least one arm (3) is connected to the linear actuator (4) through a rotational joint (6), whereas other arm/s (3) is/are connected to the linear actuator/s (4) through a spherical joint (11).

2. A device for a spherical motion of a body (1) as described in Claim 1, **characterized in that** the parallel arms (3) are connected to the linear actuators (4) through the spherical joints (11) with at least two rotational degrees of freedom.

3. A device for a spherical motion of a body (1) as described in some of the above mentioned Claims, **characterized in that** a length of the first part (7) of the shank attached to the frame (5) is longer than the distance of the edge of the body (1) from the point of connection of the second part (8) of the shank to the body (1).

4. A device for a spherical motion of a body (1) as described in some of the above mentioned Claims, **characterized in that** the actuating parallel arms (3) are connected to the body (1) through a spherical joint (10) with at least two rotational degrees of freedom connected to an external shank (9) firmly fixed to the body (1).

5. A device for a spherical motion of a body (1) as described in some of the above mentioned Claims, **characterized in that** least one parallel arm (3) is bow-shaped.

6. A device for a spherical motion of a body (1) as described in some of the above mentioned Claims, **characterized in that** axes of the linear actuators are parallel.

7. A device for a spherical motion of a body (1) as described in some of the above mentioned Claims, **characterized in that** a connecting line of the centre of the spherical joint (2) and the centre of the spherical joint (10) on the arm (3) with the rotational joint (6) is perpendicular to the axis of the rotational joint (6).

8. A device for a spherical motion of a body (1) as described in some of the above mentioned Claims, **characterized in that** a plane perpendicular to the axis of the rotational joint (6) and passing through the centre of the spherical joint (10) on the arm (3) with the rotational joint (6) passes off the centre of the spherical joint (2).

9. A device for a spherical motion of a body (1) as described in some of the above mentioned Claims, **characterized in that** on the body (1) there is an attached tool (12), an axis of which is parallel with a plane perpendicular to the axis of the rotational joint (6) and passing through the centre of the spherical joint (10) on the arm (3) with the rotational joint (6), whereas it is perpendicular to the connecting line of the centre of the spherical joint (2) of the shank and the centre of the spherical joint (10) on the arm (3) with the rotational joint (6).

10. A device for a spherical motion of a body (1) as described in some of the above mentioned Claims, **characterized in that** the first part (7) of the shank is fitted with an actuator (13) for a change in a position of the spherical joint (2).

## Patentansprüche

1. Anlage für Steuerung der sphärischen Bewegung des Körpers (1), verbundenen mit dem Rahmen (5) mittels das Gelenk (2), angeordneten auf dem Schaft, der das Körper (1) mit dem Rahmen (5) verbindet, wobei der Schaft auf zwei Teilen (7, 8) geteilt ist, und das Kugelgelenk (2) mit mindestens zwei rotatorischen Freiheitsgraden, das zwischen dem ersten Teil (7) des Schaft, der fest mit dem Rahmen (5) gehalten ist, und dem zweiten Teil (8) des Schaft, der fest zu dem Körper (1) gehalten ist, angeordnet ist, und durch die Steuerungsarme (3) mit Verschiebeantrieben (4) angeordneten auf dem Rahmen (5), **dadurch gekennzeichnet, daß** der Anzahl der Parallelarme (3) mit Verschiebeantrieben (4) drei ist, und mindestens einer Arm (3) zu dem Verschiebeantrieb (4) durch das Drehgelenk (6) verbunden ist, wobei anderer/e Arm/e (3) durch das Kugelgelenk (11) mit dem/den Verschiebeantrieb/en (4) verbunden ist/sind.

2. Anlage für die sphärische Bewegung des Körpers (1) nach dem Anspruch 1, **dadurch gekennzeichnet, daß** die Parallelarme (3) zu den Verschiebeantrieben (4) durch die Kugelgelenke (11) mit mindestens zwei rotatorischen Freiheitsgraden verbunden sind.

3. Anlage für die sphärische Bewegung des Körpers (1) nach einem der vorhergehenden Ansprüche, **dadurch gekennzeichnet, daß** die Länge des ersten Teil (7) des Schaft befestigten zum Rahmen (5) grösser als der Abstand des Rand des Körpers (1) von dem Befestigungspunkt der zweiten Teil (8) des Schaft zum Körper (1) ist.

4. Anlage für die sphärische Bewegung des Körpers (1) nach einem der vorhergehenden Ansprüche, **dadurch gekennzeichnet, daß** die Steuerungsparallelarme (3) mit dem Körper (1) durch das Kugelgelenk (10) mit mindestens zwei rotatorischen Freiheitsgraden verbunden sind, der mit der Außenschaft (9) festverbundenen mit dem Körper (1) verbindet ist.

5. Anlage für die sphärische Bewegung des Körpers (1) nach einem der vorhergehenden Ansprüche, **dadurch gekennzeichnet, daß** mindestens ein Parallelarm (3) eine Bogenform aufweist.

6. Anlage für die sphärische Bewegung des Körpers (1) nach einem der vorhergehenden Ansprüche, **dadurch gekennzeichnet, daß** die Achsen der Verschiebungsantriebe parallel sind.

7. Anlage für die sphärische Bewegung des Körpers (1) nach einem der vorhergehenden Ansprüche, **dadurch gekennzeichnet, daß** die Verbindungslinie des Mittelpunktes des Kugelgelenks (2) und des Mittelpunktes des Kugelgelenks (10) auf dem Arm (3) mit dem Drehgelenk (6) auf die Achse des Drehgelenks (6) senkrecht ist.

8. Anlage für die sphärische Bewegung des Körpers (1) nach einem der vorhergehenden Ansprüche, **dadurch gekennzeichnet, daß** die Ebene, die senkrecht auf die Achse des Drehgelenks (6) ist und durch den Mittelpunkt des Kugelgelenks (10) auf dem Arm (3) mit dem Drehgelenk (6) lauft, außer des Mittelpunkt des Kugelgelenks (2) durchlauft.

9. Anlage für die sphärische Bewegung des Körpers (1) nach einem der vorhergehenden Ansprüche, **dadurch gekennzeichnet, daß** auf dem Körper (1) ein Werkzeug (12) befestigt ist, dessen Achse parallel mit der Ebene senkrechten auf die Achse des Drehgelenk (6) ist, und die durch den Mittelpunkt des Kugelgelenks (10) auf dem Arm (3) mit dem Drehgelenk (6) lauft, wobei sie senkrecht auf die Verbindungslinie des Mittelpunkt des Kugelgelenks (2) der Schaft und des Mittelpunkts des Kugelgelenks (10) auf dem Arm (3) mit dem Drehgelenk (6) ist.

10. Anlage für die sphärische Bewegung des Körpers (1) nach einem der vorhergehenden Ansprüche, **dadurch gekennzeichnet, daß** der erste Teil (7) der Schaft mit einem Antrieb (13) für Positionswechsel des Kugelgelenks (2) versehen ist.

## Revendications

1. Le dispositif de commande du mouvement sphérique du corps (1) relié au châssis (5) au moyen d'une articulation sphérique (2) disposée sur la tige reliant le corps (1) au châssis (5), la tige étant divisée en deux parties (7, 8), et l'articulation sphérique (2) avec au moins deux degrés rotatifs de liberté est disposée entre la première partie (7) de la tige, solidement fixée au châssis(5), et la seconde partie (8) de la tige, solidement fixée au corps (1), et au moyen des bras de commande (3) avec des entraînements coulissants (4) disposés au châssis (5), **caractérisé en ce qu'**il y a trois bras parallèles (3) avec des entraînements coulissants (4) et qu'au moins un bras (3) est relié à l'entraînement coulissant par une articulation sphérique (6), l'autre (les autres) bras étant relié(s) (3) à (aux) l'entraînement(s) coulissant(s) (4) par une articulation sphérique(11).

2. Le dispositif de mouvement sphérique du corps (1) selon la revendication 1, **caractérisé en ce que** les bras parallèles (3) sont reliés aux entraînements coulissants (4) par articulations sphériques (11) avec au moins deux degrés rotatifs de liberté.

3. Le dispositif de mouvement sphérique du corps (1) selon l'une des revendications précédentes, **caractérisé en ce que** la longueur de la première partie (7) de la tige fixé au châssis (5) est supérieure à la distance du bord du corps (1) à partir du point d'attache de la seconde partie (8) de la tige au corps (1).

4. Le dispositif de mouvement sphérique du corps (1) selon l'une des revendications précédentes, **caractérisé en ce que** les bras de commande parallèles (3) sont reliés au corps (1) par une articulation sphérique (10) avec au moins deux degrés rotatifs de liberté relié à la tige extérieure (9) solidement reliée au corps(1).

5. Le dispositif de mouvement sphérique du corps (1) selon l'une des revendications précédentes, **caractérisé en ce qu'**au moins un bras parallèle (3) a une forme arquée.

6. Le dispositif de mouvement sphérique du corps (1) selon l'une des revendications précédentes, **caractérisé en ce que** les axes des entraînements coulissants sont parallèles.

7. Le dispositif de mouvement sphérique du corps (1) selon l'une des revendications précédentes, **caractérisé en ce que** la liaison entre le centre de l'articulation sphérique (2) et le centre de l'articulation sphérique (10) sur le bras (3) avec une articulation rotative (6) est perpendiculaire à l'axe de l'articulation rotative (6).

8. Le dispositif de mouvement sphérique du corps (1) selon l'une des revendications précédentes, **caractérisé en ce que** le plan perpendiculaire à l'axe de l'articulation rotative (6) et passant par le centre de l'articulation rotative (10) sur le bras (3) avec l'articulation rotative (6) passe hors du centre de l'articulation rotative (2).

9. Le dispositif de mouvement sphérique du corps (1) selon l'une des revendications précédentes, **caractérisé en ce qu'**au corps (1), il y a un outil (12) fixé dont l'axe est parallèle au plan perpendiculaire à l'axe de l'articulation rotative (6) et passant par le centre de l'articulation sphérique (10) sur le bras (3) avec l'articulation rotative (6), étant perpendiculaire à la liaison du centre de l'articulation sphérique (2) de la tige et du centre de l'articulation sphérique (10) sur le bras (3) avec l'articulation rotative (6).

10. Le dispositif de mouvement sphérique du corps (1) selon l'une des revendications précédentes, **caractérisé en ce que** la première partie (7) de la tige est munie d'un entraînement (13) pour changer la position de l'articulation sphérique (2).
